# FASCICULE DE BREVET EUROPEEN

(11) **EP 2 011 124 B1**
(45) Date de publication et mention de la délivrance du brevet: **13.07.2011**
(21) Numéro de dépôt: 07728543.5
(22) Date de dépôt: 26.04.2007
(51) Int. Cl.: G21C 19/32, G21F 5/12, G21F 5/14

(54) **HOTTE POUR CHARGEMENT DE CONTAINER AVEC AU MOINS UN ASSEMBLAGE DE COMBUSTIBLE NUCLEAIRE ET PROCEDE DE CHARGEMENT**
LADEBEHÄLTER-FASS FÜR MINDESTENS EIN KERNBRENNSTOFFBÜNDEL UND LADEPROZEDUR
CONTAINER-LOADING CASK FOR AT LEAST ONE NUCLEAR FUEL BUNDLE AND LOADING PROCEDURE

(30) Priorité: 27.04.2006 FR 0651499
(43) Date de publication de la demande: 07.01.2009
(73) Titulaire: Areva NC, 75009 Paris (FR)
(72) Inventeur: FANTINI, Serge, F-30150 Saint Genies de Comolas (FR)
(74) Mandataire: Ilgart, Jean-Christophe
(86) Numéro de dépôt international: PCT/EP2007/054088
(87) Numéro de publication internationale: WO 2007/125072

(56) Documents cités:
- FR-A1- 2 574 582
- FR-A1- 2 582 438
- GB-A- 993 372
- US-A- 5 319 686

## Description

### DOMAINE TECHNIQUE ET ART ANTÉRIEUR

La présente invention se rapporte principalement à une hotte de chargement de container avec au moins un assemblage de combustible nucléaire, notamment de crayons contenant des pastilles de MOX (mélange d'oxyde d'uranium et d'oxyde de plutonium), à un dispositif de chargement d'au moins un assemblage de combustible nucléaire dans un container de transport, à un moyen de préhension coopérant avec la hotte et à un procédé de chargement mettant en oeuvre ladite hotte et ledit moyen de préhension.

Les assemblages de combustible nucléaire sont formés par un assemblage de dizaines de crayons de faible diamètre relativement à leur longueur, ces crayons sont des gaines remplies de pastilles de combustible nucléaire, par exemple du MOX. Ces assemblages ont une section rectangulaire de plusieurs dizaines de centimètres de côté, et mesurent plusieurs mètres de long.

Ces assemblages sont généralement réalisés dans l'usine de fabrication des pastilles, et doivent être transportés vers les centrales nucléaires où ils seront placés dans des réacteurs.

Le transport de ces assemblages s'effectue dans des containers sécurisés, dans lesquels sont enfermés de manière étanche un ou plusieurs assemblages de combustible.

Lors de leur déchargement dans la centrale nucléaire, les containers peuvent être immergés ou non dans une piscine. Lors de la sortie des assemblages des containers, l'eau rentre dans le container. A la fin du déchargement, le container est sorti de la piscine. Les parties extérieures du container sont nettoyées de manière à ne pas comporter de traces de contamination radioactives au-delà d'un seuil autorisé. Ensuite le container est renvoyé, fermé, vers l'usine de fabrication d'assemblages pour un prochain transport.

Or l'intérieur du container peut contenir des traces de contamination. Ainsi, lors du prochain remplissage et de l'ouverture du container, si aucune mesure n'est prise pour protéger l'environnement extérieur de l'intérieur du container, celui-ci sera soumis à la contamination.

Les bouchons du container servant à obturer de manière étanche les alvéoles de réception des assemblages, peuvent également comporter sur leur face inférieure en contact avec l'intérieur de l'alvéole, des particules radioactives.

C'est par conséquent un but de la présente invention d'offrir un dispositif de chargement de container avec des assemblages de combustible radioactif permettant une protection de l'environnement extérieur vis-à-vis de l'intérieur du container.

C'est également un but de la présente invention d'offrir un procédé de chargement de container avec des assemblages de combustible radioactif offrant un confinement amélioré.

### EXPOSÉ DE L'INVENTION

Les buts précédemment énoncés sont atteints par une hotte de chargement apte à être disposée de manière étanche sur la partie supérieure du container sur laquelle sont montés les bouchons obturant les alvéoles de stockage, ladite hotte comportant une ouverture pour permettre le passage d'un moyen pour enlever un bouchon d'une alvéole et un logement à l'intérieur de la hotte pour stocker le bouchon pendant le chargement.

En d'autres termes, tous les éléments en contact avec l'intérieur d'une alvéole sont confinés dans la hotte, évitant ainsi tout risque de pollution de l'environnement extérieur.

La présente invention a donc principalement pour objet une hotte pour le chargement d'au moins un assemblage de combustible dans un container de transport, comportant un corps d'axe longitudinal apte à recouvrir de manière étanche une extrémité supérieure d'un container, au moins une ouverture pour le passage d'un assemblage de combustible, et au moins un moyen apte à maintenir un moyen d'obturation d'une chambre du container à l'intérieur de la hotte et à distance d'une entrée de ladite chambre lors du chargement.

Selon l'invention, le moyen de maintien comporte un premier bras mobile en rotation autour d'un premier axe et un deuxième bras attaché au premier bras et mobile en rotation par rapport au premier bras, ladite hotte comportant également des moyens de commande externes des bras, et dans laquelle le deuxième bras comporte un logement pour recevoir le moyen d'obturation.

La hotte peut comporter un moyen de passage d'un outil pneumatique destiné à être branché sur le container et un logement pour recevoir un bouchon lorsque l'outil est branché, ledit bouchon étant destiné à obturer l'orifice de branchement de l'outil pneumatique.

L'outil pneumatique permet d'actionner des patins de maintien des assemblages dans les alvéoles.

De manière avantageuse, la hotte comporte des moyens de commande pour le premier bras et des moyens de commande pour le deuxième bras, le deuxième bras pouvant être déplacé indépendamment du premier bras.

En outre, les moyens de commande peuvent être actionnés manuellement et comportent des moyens d'assistance afin de déplacer les bras selon des trajectoires prédéterminées.

En particulier, les moyens de commandes peuvent être formés par un premier et un deuxième volants solidaires d'un premier et d'un deuxième arbres de liaison respectivement, lesdits premier et deuxième arbres de liaison étant raccordés mécaniquement au premier et au deuxième bras respectivement, une liaison mécanique entre le deuxième volant et le deuxième bras, pouvant être disposée à l'intérieur du premier bras.

Par exemple, les moyens d'assistance comportent un plateau fixe et un plateau mobile en rotation avec un arbre de liaison, les plateaux étant superposés, un plateau comportant une empreinte délimitant deux positions extrêmes du bras associé et une butée portée par l'autre plateau, de manière à limiter l'angle de rotation entre les deux plateaux, la butée pouvant être formée par un pion amovible placé dans un orifice dans l'autre plateau en regard de l'empreinte.

De manière avantageuse, le plateau mobile associé au deuxième bras est formé par le volant.

Dans un exemple de réalisation, le plateau mobile est distinct du volant de commande du premier bras et solidaire en rotation de celui, et le plateau fixe pour le deuxième bras est fixé sur la surface supérieure de la hotte.

Les moyens d'assistance comportent dans un mode de réalisation avantageux, plusieurs empreintes de manière à définir plusieurs positions extrêmes.

Les empreintes sont par exemple des arcs de cercle centrés sur le centre des plateaux.

En outre, les moyens de commande peuvent comporter des moyens d'indexation en position de chaque bras.

En particulier, les moyens de verrouillage peuvent comporter un pion apte à coopérer avec des encoches pratiquées sur la périphérie du disque mobile, chaque encoche étant alignée avec une extrémité d'une empreinte selon un rayon du disque.

De manière préférée, le logement est placé à une extrémité libre du bras et comporte un fond étanche de manière à récolter les poussières et/ou débris portés par le bouchon.

De plus le bras peut comporter également la le logement pour le bouchon de l'orifice de branchement de l'outil pneumatique.

Dans un mode de réalisation particulier, la hotte comporte plusieurs ouvertures pour être chacune mises en regard d'une chambre respective du container pour le chargement et le déchargement d'assemblages de combustible nucléaire.

La hotte peut comporter des moyens container de manière à ce qu'une ouverture de la hotte soit en regard d'une chambre du container. Les moyens d'indexation peuvent comporter une nervure apte à coopérer avec une rainure.

La nervure est, par exemple, en saillie de la surface intérieure de la honte et la rainure est pratiquée dans la surface extérieure du container.

En outre, la hotte peut comporter également des repères visuels pour aider à la mise en place de la hotte sur le container.

La hotte, peut également comporter à son extrémité inférieure, destinée à venir en contact de l'extrémité supérieure du container, une première et une deuxième faces d'appui annulaires, destinées à venir respectivement en appui d'une première et d'une deuxième faces supports du container, la deuxième face d'appui étant disposée radialement vers l'intérieur de la hotte relativement à la première face d'appui, les deux faces d'appui étant raccordées par un manchon s'étendant selon l'axe longitudinal.

En particulier, la deuxième face d'appui compote un joint annulaire apte à venir en contact avec une face supérieure du container. Le joint est par exemple un joint torique.

La honte peut également comporter des anneaux pour permettre la préhension et le déplacement de la hotte.

La hotte comporte également, de manière avantageuse, un bouchon pour l'entrée du passage.

Le passage de l'outil pneumatique pour le serrage des assemblages, est également muni d'une ouverture obturée par un bouchon.

De manière avantageuse, les bouchons sont en Kyowaglass®, assurant une protection radiologique et permettent une visibilité de l'intérieur de la hotte Lors des manoeuvres.

Le Kyowaglass® est une résine méthacrylique transparente fabriquée par la compagnie Kuraray et utilisé dans les domaines nucléaire et médical comme bouclier contre les radiations.

Par exemple, la hotte peut également comporter des trappes d'accès à l'intérieur de la hotte.

Le corps de la hotte comporte par exemple une paroi de forme polygonale, formée par des panneaux de Kyowaglass®, assurant une protection radiologique et une visibilité de l'intérieur de la hotte, et un fond supérieur de forme polygonale. Le fond supérieur est également en matériau protecteur, par exemple en plâtre polyéthylène boré (PPB).

Les panneaux peuvent se raccorder l'un à l'autre par un élément comportant deux faces inclinées l'une par rapport à l'angle souhaité entre deux panneaux et une face orthogonale au deux premières faces formant appui pour le fond supérieur du corps, l'élément comportant également une jambe de force pour le rigidifier, un joint étant disposé entre les panneaux et les éléments de raccordement.

La hotte comporte de manière avantageuse autant de passages que d'alvéoles du container pour le chargement des assemblages, par exemple huit.

Le premier bras peut également comporter une trappe d'accès à la liaison mécanique.

La hotte, dans un mode de réalisation particulier, comporte une couronne en borolène.

La présente invention a également pour objet un dispositif de chargement d'au moins assemblage de combustible nucléaire dans un container de transport comportant une hotte telle que décrite précédemment et des moyens de confinement dynamique destinés à être raccordés avec un canal en communication avec l'intérieur des chambres et aptes à provoquer un écoulement d'air de l'extérieur vers l'intérieur de la hotte, puis vers l'intérieur des chambres pendant toute la période d'ouverture d'une chambre.

Les moyens de confinement dynamique peuvent comporter un moyen d'aspiration pneumatique destiné à être raccordé à un moyen de collecte de particules aspirées dans le container.

La présente invention a également pour objet un procédé de chargement d'un container avec un assemblage de combustible nucléaire, comportant les étapes suivantes :
a) mise en place de la hotte précédemment décrite, sur l'extrémité supérieure d'un container,
b) branchement des moyens de confinement dynamique sur le container,
c) de retrait du bouchon pour l'outil pneumatique et de mise en place de l'outil pneumatique,
d) retrait du bouchon de la première alvéole,
e) mise en place d'un assemblage dans la première alvéole,
f) remise en place du bouchon de la première alvéole,
g) répétition des étapes d à f) le cas échéant, pour le chargement d'autres assemblages dans les autres alvéoles,
h) retrait de l'outil pneumatique et de remise en place du bouchon pour l'outil pneumatique,
i) débranchement des moyens de confinement dynamique,
j) enlèvement de la hotte.

Lors de l'étape c), le retrait du bouchon pneumatique du container et le branchement de l'outil pneumatique, en lieu et place du bouchon pneumatique, sont réalisés.

En outre, la manipulation du bouchon pneumatique du contaminer et des bouchons d'alvéoles s'effectue à l'aide d'un moyen de préhension .

De manière avantageuse, avant le retrait du bouchon de la première alvéole, des moyens de confinement dynamique sont activés.

Dans un mode particulier, préalablement au retrait du bouchon pneumatique du container ou des bouchons des alvéoles, un retrait d'un bouchon d'un Passage associé de la hotte est effectué.

Il peut être prévu de manière avantageuse suite à l'étape d), de mettre en place un avaloir sur le contour de l'ouverture de la chambre.

### BRÈVE DESCRIPTION DES DESSINS

La présente invention sera mieux comprise à l'aide de la description qui va suivre et des dessins annexés, sur lesquels la partie supérieure et la partie inférieure correspondent respectivement aux parties haute et basse des dessins et pour lesquels :
la figure 1 est une vue de dessus d'une hotte selon la présente invention,
- la figure 2 est une vue en coupe transversale de la figure 1,
- la figure 3 est une vue selon un plan de coupe A-A de la figure 2 dans une étape de chargement,
- la figure 3A est une vue à plus grande échelle de la figure 3,
- la figure 4 est une vue de détail de la figure 3,
- la figure 5 est une vue en coupe selon le plan de coupe K-K de la figure 4,
- la figure 6 est une vue de détail de la figure 2,
- la figure 7 est une vue de dessus selon la flèche F d'un détail de la figure 3,
- la figure 8 est une vue en coupe selon le plan de coupe I-I de figure 3,
- la figure 9 est une vue en coupe selon le plan de coupe H-H de la figure 3,
- la figure 10 est une vue de détail de la figure 3,
- la figure 11 est une représentation schématique d'un dispositif de chargement selon la présente invention.

### EXPOSÉ DÉTAILLÉ DE MODES DE RÉALISATION PARTICULIERS

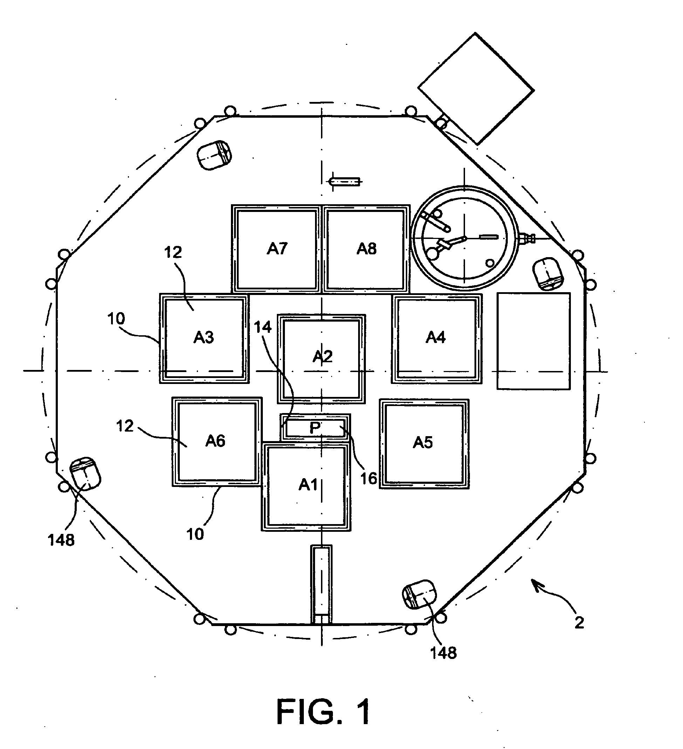

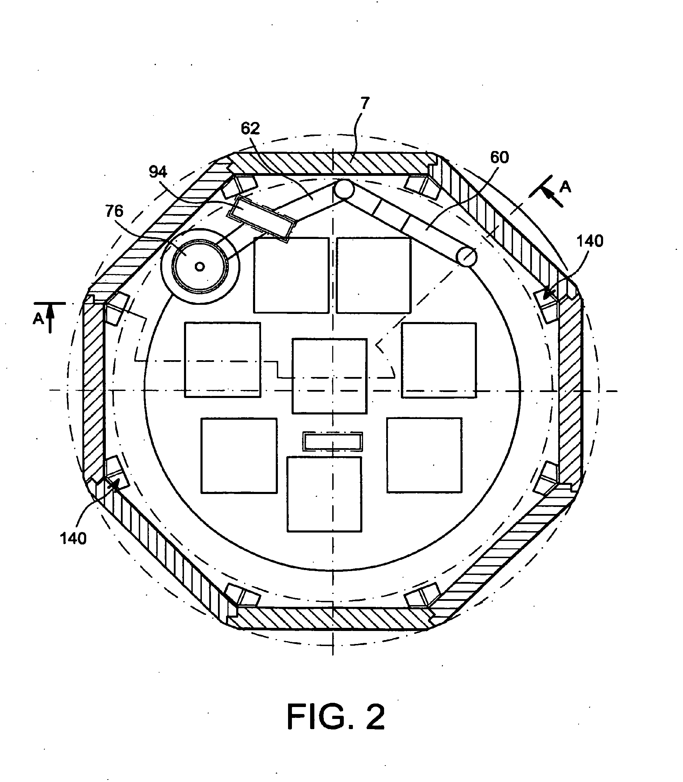

Sur les figures 1 à 3, on peut voir une hotte 2 selon la présente invention comportant un corps 4 d'axe longitudinal X, muni d'une paroi 6 et d'un fond supérieur 8. Dans l'exemple représenté, la hotte 2 est de forme sensiblement octogonale, la paroi 6 est donc à section octogonale et le fond supérieur 8 est également octogonal. Le fond 8 comporte des ouvertures 10 de passage pour des assemblages de combustible (non représentés) et obturées par des bouchons amovibles 12. Les ouvertures sont par exemple de forme rectangulaire, avantageusement carrée.

Dans l'exemple représenté, la hotte comporte huit ouvertures et permet de remplir huit alvéoles A1 à A8 (non représentées sur la figure 1) de container. Les références A1 à A8 sont placées sur la figures 1, afin d'associer à chaque passage 10 une alvéole particulière.

Le fond 8 comporte également une ouverture 14 munie également d'un bouchon 16 amovible pour permettre le raccord à un moyen de commande de serrage pneumatique des patins (non représenté), appelé également outil pneumatique. Cette commande de serrage permet de maintenir les assemblages dans les logements après leur chargement dans le container.

Le toit est avantageusement réalisé en Plâtre Polyéthylène Boré (PPB) et la paroi 6 est réalisée avec des panneaux 7, par exemple de Kyowaglass®. Les bouchons 12 et 16 sont également avantageusement réalisés en Kyowaglass®. Le Kyowaglass® est un matériau neutrophage, qui assure ainsi que le PPB, une protection biologique.

Le Kyowaglass® est une résine méthacrylique transparente fabriquée par la compagnie Kuraray et utilisé dans les domaines nucléaire et médical comme bouclier contre les radiations.

Le corps 4 comporte également, à une extrémité inférieure de la paroi 6, des moyens 20 de positionnement de la hotte 2 sur un container 18. Ces moyens 20 sont en forme de gradin et comportent des premier 22 et deuxième 24 anneaux raccordés par un cylindre 26 d'axe X. Le premier anneau 22 s'étend radialement vers l'extérieur du cylindre 26 et le deuxième anneau 24 s'étend radialement vers l'intérieur du cylindre 26. Les premier 22 et deuxième 24 anneaux sont orthogonaux aux cylindres.

Des anneaux inclinés par rapport à l'axe X, ne sortent pas du cadre de la présente invention.

Le cylindre peut également être remplacé par un cône dont la section augmente en s'éloignant de la hotte.

Le premier anneau 22 comporte une face supérieure 28 en appui fixe contre une extrémité inférieure 30 de la paroi 6, et une face inférieure 32 destinée à venir en contact avec une première face annulaire d'extrémité supérieure 34 du container 18.

De manière avantageuse, la face supérieure 28 comporte, à une extrémité radialement interne, une couronne 36 en saillie de dimensions adaptées pour coopérer avec la périphérie intérieure de l'extrémité inférieure 30 de la paroi 6, assurant un maintien transversal du premier anneau 22 par rapport à la paroi 6.

Le deuxième anneau 24 comporte une face inférieure 38 destinée à venir en appui d'une deuxième face annulaire d'extrémité supérieure 40 du container 18 placé en dessous de la première face annulaire 34

De manière avantageuse, une couronne 42 s'étend d'une extrémité radialement interne 44 du deuxième anneau 24 en éloignement de la hotte et est dimensionnée pour coopérer avec une périphérie interne du container.

Dans l'exemple représenté, les moyens 20 de positionnement sont réalisés d'un seul tenant en acier inoxydable.

La couronne assure une protection radiologique complémentaire.

Un moyen d'étanchéité 46 est également prévu sur la face inférieure 38 du deuxième anneau 24 et est destiné à venir en contact étanche avec la face annulaire 40. Le joint est, dans l'exemple représenté, formé par un joint torique monté dans une gorge annulaire pratiquée dans la face inférieure 38.

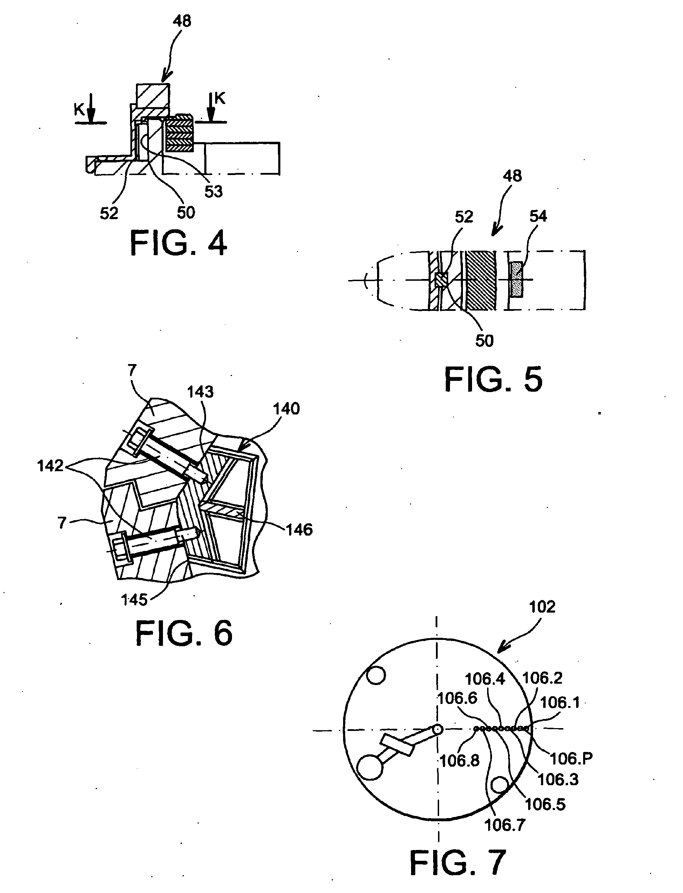

La hotte comporte (figures 4 et 5) également des moyens d'indexation 48 angulaire de la hotte relativement au container de manière à aligner selon un axe vertical une ouverture 10 avec une entrée 14 d'une alvéole.

Les moyens 48 sont, dans l'exemple représenté, formés par une rainure 50 coopérant avec une nervure 52. La nervure 52 peut être portée par le container et la rainure 50 par la hotte ou inversement

La nervure est par exemple formée par un barreau à section carrée fixée dans une rainure pratiquée dans une paroi cylindrique 53 raccordant les première 34 et deuxième 40 faces d'extrémité du container. La rainure 50 est pratiquée dans le cylindre 26.

La hotte et le container 18 comportent également avantageusement des repères visuels 54 au droit de la rainure 50 et de la nervure 52 et visibles de l'extérieur par un opérateur pour aider à l'alignement de la rainure 50 et de la nervure 52, facilitant la mise en place de la hotte sur le container.

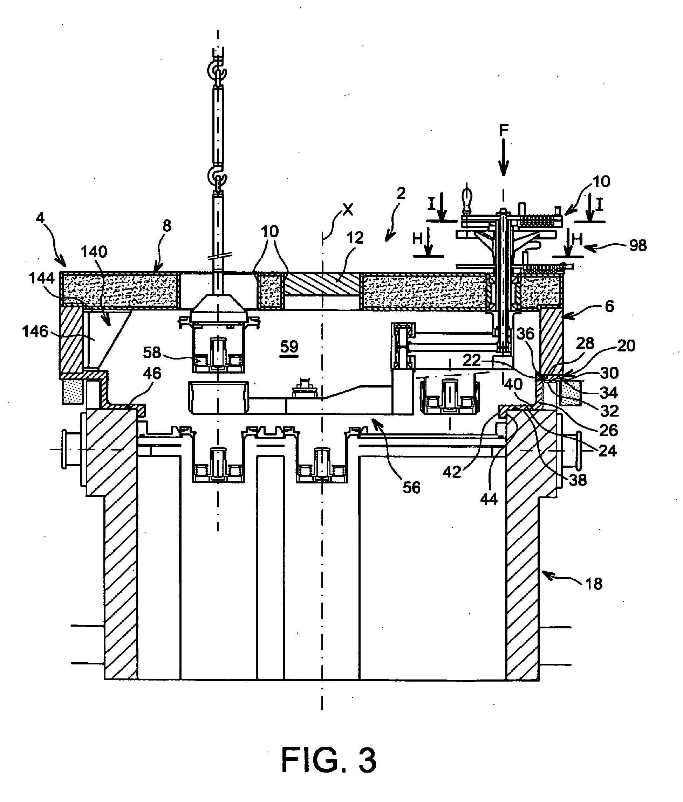

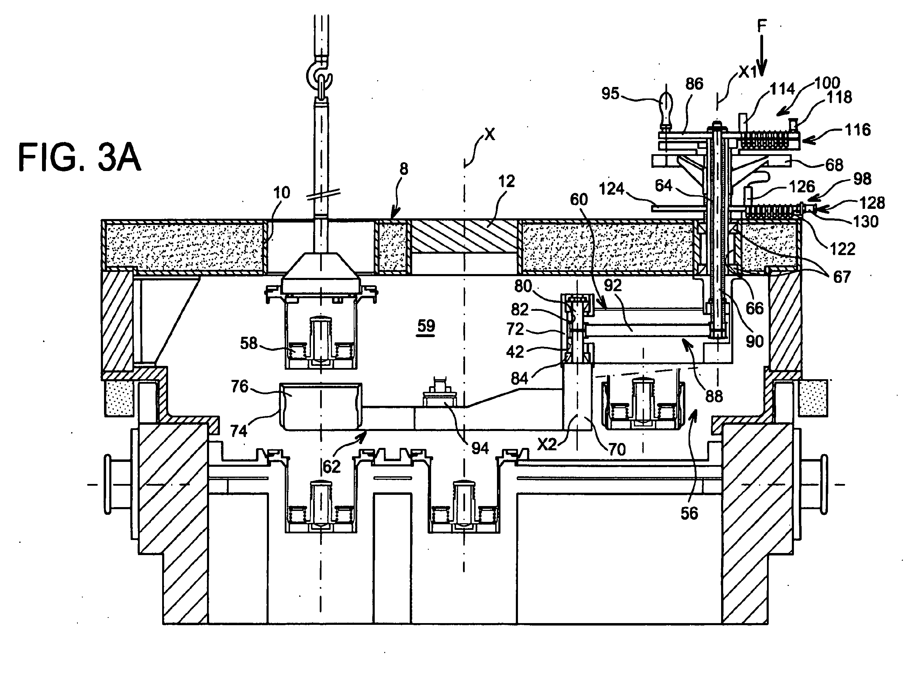

La hotte comporte également des moyens 56 (figure 3A) pour maintenir des bouchons 58 des alvéoles A1 à A8 à l'intérieur de la hotte dans un espace 59 confiné entre le fond supérieur 8 et le container, lorsque ceux-ci sont enlevés de l'entrée des alvéoles pour permettre la mise en place d'assemblages.

Dans l'exemple selon l'invention représenté, les moyens 56 comportent un premier 60 bras mobile en rotation par rapport au fond supérieur 8, autour d'un axe X1 parallèle à l'axe X et un deuxième bras 62 mobile en rotation par rapport au premier bras 60 autour d'un axe X2 parallèle à l'axe X1 et distinct de celui-ci.

Le premier bras est solidaire en rotation d'un arbre 64 monté libre en rotation dans un passage 66, pratiqué dans le fond supérieur 8, au moyen de paliers 67. L'arbre 64 est déplaçable en rotation de l'extérieur de la hotte, au moyen d'un volant 68.

Le deuxième bras 62 est avantageusement fixé libre en rotation par une première extrémité 70 à une extrémité 72 du premier bras éloignée de l'arbre 64. Le deuxième bras 62 comporte à une deuxième extrémité 74, un logement de réception 76 d'un bouchon 58.

Le deuxième bras 62 comporte à sa première extrémité 70 un arbre 80 monté dans un alésage 82 pratiqué vers l'extrémité 72 du premier bras 60 et apte à pivoter autour de l'axe X2 en rotation par l'intermédiaire de paliers 84.

Le deuxième bras 62 est disposé en dessous du premier bras 60 du côté de l'extrémité ouverte de la hotte.

Le deuxième bras 62 peut être disposé au-dessus du premier bras 60 et être proche du fond supérieur 8.

Le déplacement du deuxième bras 62 est commandé également par l'intermédiaire d'un volant 86 disposé à l'extérieur de la hotte 2, et indépendant du volant 68 commandant le déplacement du premier bras 60. Le deuxième bras 62 est relié au volant 86 par des moyens de liaison 88 qui sont, de manière avantageuse, disposés à l'intérieur du premier bras 60 et de l'arbre 64.

Les moyens de liaison 88 comportent un arbre 90 d'axe X1 coaxial à l'arbre 64 et monté à l'intérieur de celui-ci, l'arbre 64 est donc réalisé dans ce mode de réalisation, sous la forme d'un tube. Les moyens 88 comportent également un élément de transmission 92 reliant l'arbre 90 et l'arbre 84 de manière à transmettre les déplacements du volant 86 au bras 62.

Le volant 86 peut par exemple comporter, comme cela est représenté sur la figure 3A, une manette de déplacement 95 en saillie du volant.

Le déplacement du premier bras 60 est limité par des butées (non représentées) afin d'éviter tout choc entre le bras 60 et les panneaux constituant la paroi 6 de la hotte. De manière avantageuse, le deuxième bras 62 est disposé suffisamment bas selon l'axe X, pour ne pas risquer de venir en contact des panneaux constituant la paroi 6. En effet, il se trouve au niveau de l'élément 20 de liaison.

Cependant, on peut prévoir également des moyens de butées pour le deuxième bras 62.

Un premier et un deuxième bras, se trouvant tous deux au niveau des panneaux constituant la paroi 6, ne sortent pas du cadre de la présente invention.

Le deuxième bras 62 comporte également un deuxième logement de réception 94 pour recevoir le bouchon du raccord pneumatique du container 18. Celui-ci est avantageusement disposé sensiblement dans la partie médiane du deuxième bras 62 entre le logement de réception 76 du bouchon d'alvéole et l'extrémité 70 reliée au premier bras 60. Le logement 94 est avantageusement de forme rectangulaire sensiblement identique à celle du bouchon 16.

Les logements 76 et 94 comportent avantageusement des fonds inférieurs fermés et étanches afin d'assurer la collecte des poussières et débris éventuels ayant pu se déposer sur la surface inférieure des bouchons, cette surface étant en contact, lorsque les bouchons sont en place, avec le volume intérieur des alvéoles et du raccord pneumatique respectivement.

Les bouchons 58 tels que représentés sur les figures 3 et 3A sont soulevés par un dispositif de préhension.que nous décrirons par la suite, et écartés de l'entrée des alvéoles. Le deuxième bras 62 est ensuite placé en dessous du bouchon 58 de manière à ce que le logement 76 soit disposé exactement en regard en dessous du bouchon 58 afin de pouvoir recevoir celui-ci. Le bras 62 est ensuite déplacé afin de libérer la trajectoire entre le passage 10 du fond supérieur de la hotte 8 et l'entrée de l'alvéole associée et de permettre le passage d'un assemblage de combustible.

Avantageusement, il est prévu des zones sensiblement transparentes dans la hotte pour permettre une visibilité du mouvement des bras dans la hotte par l'opérateur_{.}

Il est également avantageusement prévu des moyens d'assistance pour le déplacement du premier 60 et du deuxième 62 bras, afin de permettre une mise en place rapide des bras 60 et 62 pour recevoir le bouchon 58.

Le premier bras 60 et le deuxième bras 62 comportent respectivement des moyens d'assistance au déplacement 98 et 100. Les moyens d'assistance 98 et 100 étant de structure et de fonctionnement sensiblement équivalents, nous décrirons en détail les moyens d'assistance 100 du deuxième bras 62.

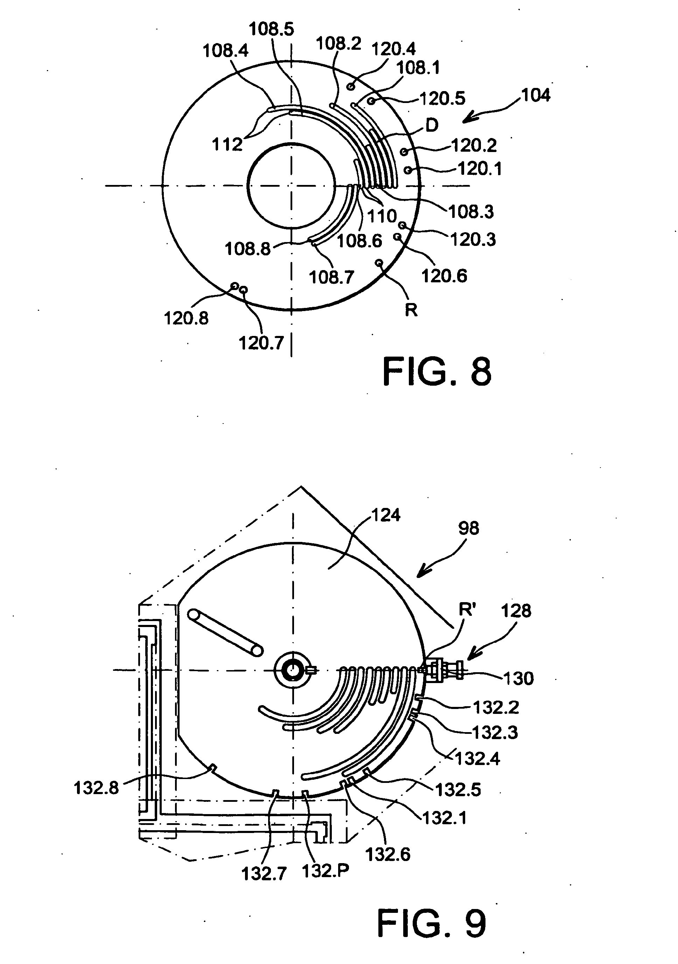

Les moyens d'assistance 100 comportent un premier plateau 102 et un deuxième plateau 104, le premier plateau 102 étant disposé au-dessus du plateau 104 dans le sens de la flèche F, les plateaux 102 et 104 étant représentés aux figures 7 et 8 respectivement.

De manière avantageuse, le premier plateau 102 est formé par le volant 86, mais on peut prévoir un plateau distinct du volant 86 et lié en rotation à celui-ci. Le plateau 102 a la forme d'un disque comportant, le long d'un rayon, une succession d'orifices 106.1 à 106.8 et 106.P dont le nombre est égal au nombre total de bouchons à déplacer, les bouchons étant des bouchons de fermeture des alvéoles devant recevoir un assemblage de combustible et le bouchon de raccord pneumatique. Dans l'exemple représenté, il y a donc neuf orifices (huit pour les alvéoles et un pour le raccord pneumatique) pratiqués dans le plateau 102.

Le plateau 104 est fixe et le plateau 102 est mobile par rapport au plateau 104.

Le plateau 104 est également en forme de disque et comporte des rainures 108 en forme d'arc de cercle centré sur le centre du disque formant le plateau 104. Les rainures 108 comportent une première extrémité 110 et une deuxième extrémité 112, toutes les extrémités 110 étant alignées le long d'un rayon, et les extrémités 112 étant disposées chacune selon un rayon distinct.

Chaque rainure 108 correspond à une trajectoire distincte 108.1, 108.2, 108.3, 108.4, 108.5, 108.6, 108.7, 108.8 et D du bras 62 afin de le positionner correctement pour récupérer chacun des neufs bouchons.

Les orifices 106 du premier plateau 102 et les rainures 108 et D du deuxième plateau 104 sont disposées sur les plateaux 102 et 104 respectivement, de manière à ce que lorsque plateau 102 est disposé au-dessus du plateau 104, ceux-ci soient alignés selon une direction parallèle à l'axe X1.

Le dispositif 100 comporte également un élément de liaison entre un orifice 106 et une rainure 108 formée dans l'exemple représenté par un pion 114 amovible, comportant une extrémité de diamètre égal au diamètre des orifices 106. Il est à préciser que la largeur des rainures 108, c'est-à-dire leur dimension selon un rayon du disque formant le plateau 104, est suffisante pour recevoir l'extrémité du pion 114.

En face de chacun des orifices 106.1 à 106.8 et l'orifice 106.P, est indiquée l'alvéole correspondante.

Nous allons expliquer le fonctionnement de ce moyen d'assistance 100.

Lorsque l'opérateur veut déplacer le deuxième bras 62, de manière à le mettre en position pour recevoir le bouchon de l'alvéole A1, il va placer le pion 114 dans l'orifice 106.1, l'extrémité intérieure du pion 114 va alors pénétrer dans la rainure en arc de cercle 108.1.

L'opérateur va faire tourner le volant 86 de la position extrême 110 à la deuxième position extrême 112 délimitée par la rainure 108.1. Ainsi le deuxième bras va se déplacer entre une première position dite « de repos » et une deuxième position dans laquelle le logement 76 sera placé juste en dessous du bouchon 58 maintenu par le système de préhension. Ainsi l'opérateur n'a pas, par lui-même, à diriger le bras 62, ce qui serait relativement fastidieux et long, mais le déplacement est entièrement guindé par la rainure 106.1.

De même, en plaçant le pion 114 dans un autre orifice 106.2 à 106.8 ou l'orifice 106.P, la trajectoire du bras sera de la même manière guidée pour récupérer respectivement les bouchons des alvéoles A2 à A8 ou le bouchon pneumatique.

Le bras 62 peut également être indexé en position, dans la position dite « position d'attente pendant le remplissage ». Pendant le remplissage d'une des alvéoles, le bras contient dans son logement 76 le bouchon de l'alvéole correspondante et est mis dans une position dite « de garage » en attendant que le remplissage de l'alvéole soit effectué, cette position de garage doit être telle qu'elle ne gêne pas la mise en place de l'assemblage combustible.

Afin d'être sûr que le bras 62 ne bouge pas pendant le remplissage et vienne s'interposer sur la trajectoire de remplissage, il est prévu un moyen d'indexation en position du bras 62 dans cette position de garage. Ce moyen d'indexation 116 est apte à immobiliser le premier plateau 102 relativement au deuxième plateau 104, c'est-à-dire à immobiliser le volant 86 en rotation. Le moyen d'indexation 116 est formé par exemple par un pion 118 monté sur le volant 86 et apte à se déplacer axialement, parallèlement à l'axe X1 et apte à pénétrer dans des orifices 120.1 à 120.8, et 120.P, de manière à immobiliser le bras dans l'une des positions de garage correspondant au remplissage des alvéoles A1 à A8 ou au branchement de l'outil pneumatique, et à une position de repos R du bras lorsque celui-ci n'est pas utilisé et ne contient pas de bouchon.

La position de garage et la position de repos peuvent être confondues.

Les orifices 120.1 à 120.8, 120.P et R sont portés par le deuxième plateau 104 en vis-à-vis de l'orifice dans lequel est monté à coulissement, le pion 118. De manière avantageuse, le pion 118 est rappelé élastiquement en direction du deuxième plateau 104 de manière à ce qu'il pénètre automatiquement dans les orifices 120.1 à 120.8, ou 120.P ou R.

De manière avantageuse le pion 114 est rattaché au volant 86, par exemple par un cordon, de manière à ce qu'il ne se perde pas.

On pourrait également prévoir que le pion 118 des moyens d'indexation en position 116 soit un pion identique ou de forme proche de celle du pion 114 ; on pourrait également prévoir d'utiliser le même pion pour d'une part, guider la trajectoire du bras 62 et pour, d'autre part, immobiliser le bras 62.

En ce qui concerne les moyens de guidage 98 pour le premier bras 60, comme décrits précédemment, ceux-ci sont proches en structure et en fonctionnement des moyens 100 de commande du deuxième bras 62. Cependant ces moyens 98 se distinguent des moyens 100, en ce que les orifices sont portés par le plateau inférieur et les rainures sont portées par un plateau supérieur 124. Le plateau inférieur 122 est fixé sur une face supérieure du fond supérieur 8 et le plateau 124 est distinct du volant 68 de commande du premier bras 60, mais solidaire en rotation de celui-ci. Par exemple, le plateau 124 est fixé sur le bras 64 en dessous du volant 68. Ainsi, le guidage du plateau 124 va également guider, et limiter le déplacement angulaire du volant 68 entre deux positions pour chaque alvéole.

Comme pour les moyens 100 de guidage pour le deuxième bras 62, le plateau 124 comporte neuf rainures, huit pour chaque alvéole et une pour le raccord pneumatique, et le plateau 122 quant à lui comporte neuf orifices de manière équivalente au premier plateau 102.

Le dispositif 98 comporte également un pion 126 qui est de structure identique au pion 114 utilisé par le dispositif 100.

Le dispositif 98 comporte également des moyens 128 d'indexation en position du premier bras 60, ces moyens 128 se distinguent des moyens 116 en ce qu'ils comportent un pion 130 apte à coulisser sensiblement perpendiculairement à l'axe X1.

Une extrémité dudit pion 130, est apte à coopérer avec des encoches 132.1 à 132.8, 132.P et R' pratiquées sur une tranche du disque 122, de manière à définir une position de garage pour chacune des positions que le bras doit adopter lors d'un remplissage d'une alvéole, ou du repos, ou du branchement pour le raccord pneumatique.

Comme décrit précédemment, le dispositif 98 comporte également des indications sur le plateau 124 de manière à repérer les rainures correspondantes à chacune des étapes de remplissage ou de branchement du raccord pneumatique.

Les deux volants sont destinés à être déplacés en rotation l'un après l'autre.

On peut également prévoir d'utiliser des moyens 98 et 100 identiques.

Dans le mode de réalisation décrit, le premier et le deuxième volant sont aptes à tourner autour d'un axe X1 identique, mais on peut envisager d'avoir deux axes de rotation distincts.

Les volants sont avantageusement déplacés manuellement par un opérateur. Mais il ne sort pas du cadre de la présente invention de prévoir des moyens d'actionnement, par exemple du type moteur électrique, pour déplacer le premier et le deuxième volant.

Le pion 126 du moyen 98 peut également, tel que représenté, être rattaché au volant ou à l'arbre 64 par un cordon de manière à éviter que celui-ci se perde.

Un moyen de maintien des bouchons lors du chargement du container comportant deux bras se déplaçant mutuellement à l'aide d'une commande unique, ou plus de deux bras ne sort pas du cadre de la présente invention.

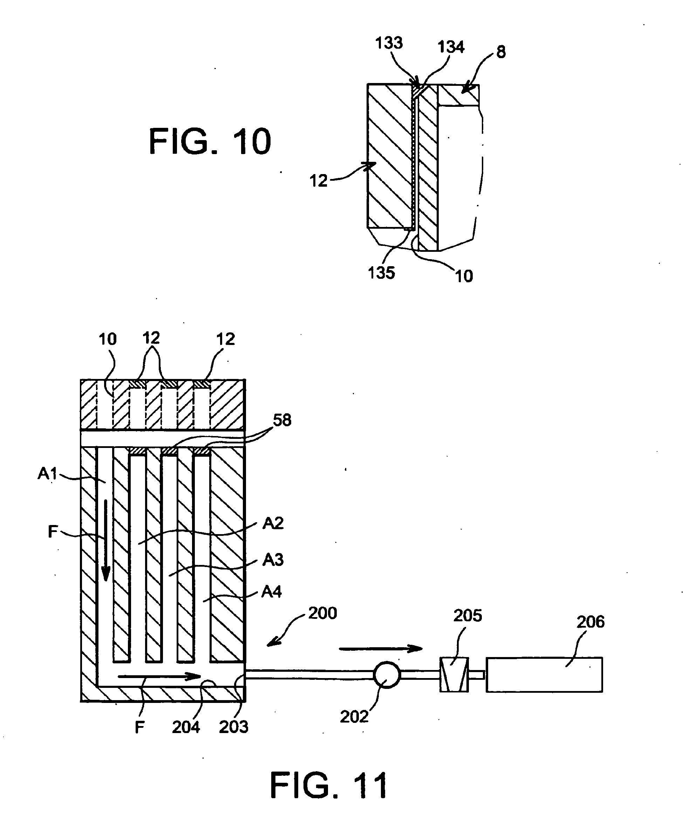

Nous allons maintenant décrire en liaison avec la figure 10, les ouvertures 10 destinées à recevoir les bouchons 12 de la hotte.

Les ouvertures 10 sont de forme rectangulaire et reçoivent un bouchon 12, par exemple réalisé en Kyowaglass®, également de forme rectangulaire. Ces bouchons 12 sont maintenus dans l'ouverture 10 par l'intermédiaire d'une bague 133, le diamètre extérieur de la bague 133 étant inférieur au diamètre intérieur du passage 10.

La bague 133 comporte une embase 134 destinée à coopérer avec l'extrémité supérieure du passage 10. Avantageusement, l'embase 134 comporte une paroi extérieure tronconique venant s'appliquer sur un chanfrein formé à l'extrémité supérieure du passage 10. La bague 133 comporte également à son extrémité inférieure une surface 135 s'étendant radialement vers l'intérieur de la bague et formant une portée annulaire pour l'extrémité inférieure d'un bouchon 12.

Il est bien entendu que le contact entre le fond supérieur 8 et la bague 133 est étanche, et que le contact entre la bague 133 et le bouchon 12 peut également être étanche.

Par exemple, la bague 133 est réalisée en acier inoxydable.

L'ouverture 14 comporte également une bague similaire à la bague 133.

Sur la figure 6, on peut voir un détail de construction de la paroi 6 du corps 4 de la hotte, en particulier la liaison entre deux panneaux 7 constituant la paroi octogonale, dans l'exemple représenté.

Chaque panneau 7 comporte à une extrémité une découpe, par exemple en dent de scie dans l'exemple représenté, de manière à pénétrer dans la découpe en dent de scie correspondante d'une extrémité d'un autre panneau afin de permettre un bon positionnement de chaque panneau par rapport à l'autre. Les panneaux 7 sont raccordés l'un à l'autre au niveau desdites extrémités par un support 140, auquel une extrémité d'un premier panneau et une extrémité d'un deuxième panneau sont fixées, par exemple par un système de vis 142.

Un joint (non représenté) est avantageusement prévu entre deux panneaux.

Le support 140 comporte une première 143 et une deuxième 145 face formant un angle déterminé pour positionner correctement un panneau par rapport à l'autre. Le support 140 comporte également un élément d'appui sensiblement plan, perpendiculaire aux deux faces 143,145 inclinées précédentes et venant en contact du fond supérieur 8 formant ainsi un système de rigidification. Le support 140 comporte également une chambre de force 146, améliorant la rigidité de l'ensemble de la hotte.

Dans l'exemple représenté, dans lequel la hotte a une forme octogonale, le corps 4 comporte huit supports 140.

La hotte comporte également avantageusement des anneaux 148 sur la face supérieure du fond supérieur 8 permettant le déplacement de la hotte 2 par accrochage par l'intermédiaire de ces anneaux à des élingues non représentées.

La hotte peut comporter également, sur ses parois latérales par exemple, des systèmes d'accrochage pour une échelle afin de permettre à l'opérateur d'accéder au volant 68 et 86 et/ou des rambardes en cas d'intervention d'un opérateur sur la hotte.

Nous allons maintenant décrire les moyens de préhension des bouchons 12 et 16 des passages 10 et 14 de la hotte et des bouchons 58 du container 18.

Les moyens de préhension des bouchons 12 et 16 sont par exemple formés d'une ventouse, puisque les bouchons 12 et 16 sont formés, dans l'exemple présenté, en Kyowaglass®.

Cette ventouse peut être manipulée manuellement et mise en contact d'un bouchon en vue de son retrait.

Les moyens de préhension des bouchons 58 des containers sont accrochés à une élingue et amenés au niveau des bouchons, par exemple par l'intermédiaire d'un pont. Les moyens de préhension sont formés, par exemple par des doigts radialement mobiles, venant coopérer avec une rainure annulaire pratiquée dans la surface supérieure du bouchon 58. Ces doigts sont mobiles de manière étanche par rapport à un corps d'actionnement. Les doigts pivotent autour d'un axe vertical de manière à pouvoir se rapprocher et s'écarter du centre du corps d'actionnement et pénétrer dans la rainure annulaire.

Les moyens de préhension comportent avantageusement un système de détection (non représenté) d'un effort anormal exercé sur le corps d'actionnement et sur les doigts. Ce système comporte, par exemple, un ressort de raideur déterminée, un indicateur fixé à une extrémité libre du ressort, à laquelle est fixé le corps d'actionnement muni des doigts et des repères visuels disposés sur un boîtier fixe par rapport au ressort.

Lorsqu'aucune charge n'est appliquée au ressort, l'indicateur est en face d'un premier repère visuel.

Lorsque la charge augmente et dépasse la raideur du ressort, l'indicateur se déplace.

Lorsque la charge s'exerçant sur les doigts devient anormalement grande, l'indicateur se positionne dans une zone repérée comme critique. L'opérateur sait alors qu'il y a un problème pour le déplacement du bouchon 58 concerné.

Il est également prévu, cette fois-ci dans l'atelier dans lequel le remplissage doit être effectué ou dans une salle adjacente à l'atelier, des systèmes de rangement pour les différents éléments utilisés pour le remplissage des containers.

En particulier pour la hotte 2, celle-ci peut être placée sur un râtelier contenant un couvercle inférieur dans lequel est déposé de manière étanche la hotte, de façon à ce que toute contamination ayant pu sortir du container et venir se placer dans l'espace 59, soit confinée dans la hotte fermée par le couvercle inférieur.

On peut également prévoir des crochets sur la surface des bouchons 12 et 16 de Kyowaglass®, évitant ainsi l'utilisation de ventouse, cependant cela réduit la visibilité à travers les bouchons.

La hotte comporte également, sur la face supérieure du fond supérieur, un moyen de maintien d'un tuyau pneumatique destiné à être branché sur le raccord pneumatique du container.

Comme expliqué précédemment, le container peut être contaminé notamment du fait du déchargement des assemblages en piscine et donc comporter des déchets susceptibles de s'échapper du container lors de son chargement. En outre, les opérateurs interviennent directement sur la hotte, par exemple pour le retrait des bouchons en Kyowaglass®, ainsi il n'est pas possible de prévoir une salle d'isolement de la hotte et du container lors de son chargement.

Il est alors prévu des moyens de confinement dynamique destinés à éviter la sortie de particules contaminantes du container lors de son chargement.

Un schéma du dispositif de chargement comportant de tels moyens de confinement est représenté en figure 11.

Les moyens de confinement dynamique 200 comportent un moyen d'aspiration 202, type ventilateur, raccordé au fond du container par un orifice 203 pratiqué dans le fond du container. Dans l'exemple représenté, le container comporte un canal inférieur 204 dans lequel débouchent toutes les chambres A1, A2, A3, A4, A5, A6, A7, A8. Ce canal 204 débouche vers l'extérieur par l'orifice 203.

Les moyens de confinement 200 sont raccordés à un réseau de ventilation 206. Un filtre 205 peut être prévu en aval du ventilateur en amont du réseau de ventilation 206.

Ainsi lorsque le ventilateur 202 est activé, une dépression apparaît dans toutes les chambres. Ainsi, lorsqu'un bouchon d'une alvéole est retiré, une circulation d'air selon les flèches F apparaît, l'air s'écoule de l'extérieur vers l'intérieur de la hotte, puis vers le fond du container, empêchant la sortie de particules contaminantes par les ouvertures 10 de la hotte.

Nous allons maintenant expliquer le procédé de remplissage d'un container 18 à l'aide d'une hotte selon la présente invention.

Un exemple de procédé selon la présente invention comporte les étapes suivantes :
a) mise en place de la hotte sur le container,
b) de branchement des moyens 200 de confinement dynamique sur le container,
c) de retrait du bouchon pour l'outil pneumatique et de mise en place de l'outil pneumatique,
d) retrait du bouchon de la première alvéole,
e) mise en place d'un assemblage dans l'alvéole,
f) remise en place du bouchon de la première alvéole,
g) répétition des étapes d) à f) le cas échéant, pour le chargement d'autres assemblages dans les autres alvéoles,
h) retrait de l'outil pneumatique et de remise en place du bouchon pour l'outil pneumatique,
i) retrait des moyens de confinement dynamique,
j) retrait de la hotte.

Nous allons maintenant décrire de manière détaillée le procédé de remplissage d'un container selon la présente invention.

Lors de l'étape a), la hotte est mise en place sur le container à l'aide des moyens mécaniques d'indexation angulaire formés par la rainure et la nervure décrites précédemment et par les repères visuels 54 présents sur les parois extérieures de la hotte et du container.

A l'étape b), le moyen d'aspiration 202 est raccordé au fond du container.

A l'étape c), pour mettre en place l'outil pneumatique, l'opérateur amène une ventouse de manière à accrocher le bouchon 16 du raccord pneumatique. Le bouchon 16 est retiré du passage 14 et déposé dans un logement prévu sur la face supérieure du fond supérieur 8.

Ensuite, le bouchon pneumatique du container est saisi par les moyens de préhension ou pince décrits précédemment, puis levé par rapport au container.

L'outil pneumatique est connecté, et les patins sont ouverts pour permettre la mise en place de l'assemblage.

L'opérateur, place ensuite le pion 114 dans la rainure du plateau 124 correspondant au déplacement du bras pour l'enlèvement du bouchon pneumatique, le pion 126 pénètre également dans l'orifice correspondant du plateau 122.

L'opérateur tourne ensuite le volant 68, ce qui provoque un déplacement angulaire déterminé du premier bras 60. L'opérateur bloque ensuite au moyen du dispositif 128 le bras 60 dans cette position.

L'opérateur place ensuite le pion dans l'orifice 106.P du plateau 102 du dispositif 100 pour déplacer le deuxième bras 62, l'extrémité inférieure du pion 114 pénètre également dans la rainure 108.P correspondante. Puis l'opérateur tourne le volant 86 provoquant un déplacement angulaire déterminé du bras 62. Le logement 94, pour le bouchon pneumatique, est alors positionné verticalement juste en dessous du bouchon pneumatique suspendu. Le bouchon pneumatique est ensuite descendu et déposé dans le logement 94.

Le bouchon pneumatique va rester entreposé dans le logement 94, pendant tout le temps du remplissage des alvéoles avec les containers.

L'opérateur place le bras 62 et le bras 60 dans une position de garage comme précédemment, en plaçant les pions dans les orifices des rainures adéquats.

Lors de l'étape d), l'opérateur va répéter les opérations précédentes en utilisant les orifices et rainures correspondantes pour enlever le bouchon de la première alvéole A1 et le déposer dans le logement 76 du deuxième bras 62 à l'aide des moyens de préhension 150.

De manière avantageuse, il est prévu suite à l'étape d), de mettre en place un avaloir sur le contour de l'ouverture de l'alvéole pour faciliter l'insertion de l'assemblage.

Lors de l'étape e), l'opérateur amène un assemblage à l'aide d'un pont de manutention, au droit de l'ouverture de la hotte correspondant à la première alvéole et de l'ouverture de la première alvéole, puis fait descendre l'assemblage dans l'alvéole jusqu'à ce qu'il vienne reposer sur le fond de la première alvéole.

Lors de l'étape f), l'opérateur remet en place le bouchon de la première alvéole, de manière à obturer la première alvéole et à confiner l'assemblage chargé dans l'alvéole. Pour cela, il va déplacer dans l'ordre le premier, puis le deuxième bras en plaçant les pions dans les orifices et rainures correspondantes à cette opération pour placer le logement 76 au dessus de la première alvéole. A l'aide des pinces, il va attraper le bouchon placé dans le logement 76 et le lever relativement au logement 76, sans le sortir de la hotte. L'opérateur déplace ensuite les premier et deuxième bras pour les placer en position repos.

Puis il descend le bouchon jusqu'à ce qu'il soit en place dans l'extrémité supérieure de la première alvéole.

Lors de l'étape g), qui n'a lieu que si plus d'un assemblage doit être chargé, l'opérateur exécute les étapes d) à f) pour toutes les alvéoles ou une partie d'entre elles.

Lors de l'étape h), lorsque les assemblages sont en place et les alvéoles rebouchées, les patins sont appliqués contre les assemblages pour les immobiliser dans les alvéoles.

L'opérateur débranche l'outil pneumatique et remet en place le bouchon pneumatique en déplaçant les premier et deuxième bras, comme cela a été précédemment expliqué.

Lors de l'étape i), les moyens de confinement dynamique sont débranchés.

Le container est mis en dépression.

Lors de l'étape j), La hotte est soulevée du container et déposée sur un réceptacle.

Le container est alors prêt à être chargé, par exemple sur un camion, pour son transport vers une centrale nucléaire.

De manière avantageuse, une étape de nettoyage, par exemple par aspiration est prévue avant d'enlever la hotte du container.

Avec la hotte telle que représentée, il est prévu de débrancher l'outil pneumatique avant le chargement de la première chambre A1, puis de remettre en place l'outil pneumatique. En effet, le mode de réalisation représenté n'offre pas les combinaisons de position des deux bras pour les huit positions sans avoir à enlever l'outil pneumatique.

## Revendications

1. Hotte pour le chargement d'au moins un assemblage de combustible nucléaire dans un container de transport, comportant un corps d'axe longitudinal (X) apte à recouvrir de manière étanche une extrémité supérieure d'un container, au moins une ouverture (10) pour le passage d'un assemblage de combustible, et au moins un moyen (56) apte à maintenir un moyen d'obturation (58) d'une chambre du container à l'intérieur de la hotte et à distance d'une.entrée de ladite chambre lors du chargement, **caractérisé en ce que** le moyen de maintien (56) comporte un premier bras (60) mobile en rotation autour d'un premier axe et un deuxième bras (62) attaché au premier bras (60) et mobile en rotation par rapport au premier bras, ladite hotte comportant également des moyens de commande externes des bras (68,86), et dans laquelle le deuxième bras (62) comporte un logement (76) pour recevoir le moyen d'obturation.

2. Hotte selon la revendication 1, comportant un moyen de passage (14) pour un outil pneumatique destiné à être branché sur le container, et un logement (94) pour recevoir un bouchon (16) lorsque l'outil pneumatique est branché, ledit bouchon (16) étant destiné à obturer l'orifice de branchement de l'outil pneumatique sur le container.

3. Hotte selon la revendication 1 ou 2, comportant des moyens de commande (68) pour le premier bras (60) et des moyens de commande (86) pour le deuxième bras (62), le deuxième bras (62) pouvant être déplacé indépendamment du premier bras (60).

4. Hotte selon la revendication 3, dans laquelle les moyens de commande (68,86) sont actionnés manuellement et comportent des moyens d'assistance (98,100) afin de déplacer les bras (60,62) selon des trajectoires prédéterminées.

5. Hotte selon la revendication précédente, dans laquelle les moyens de commandes sont formés par un premier (68) et un deuxième (86) volants solidaires d'un premier (64) et d'un deuxième (80) arbres de liaison respectivement, lesdits premier (64) et deuxième (80) arbres de liaison étant raccordés mécaniquement au premier (60) et au deuxième (62) bras respectivement, une liaison mécanique entre le deuxième volant (86) et le deuxième bras (62), étant avantageusement disposée à l'intérieur du premier bras (60).

6. Hotte selon la revendication 4 ou 5, dans laquelle les moyens d'assistance (98,100) comportent un plateau fixe (122,104) et un plateau mobile (124,102) en rotation avec un arbre de liaison, les plateaux étant superposés, un plateau (124,104) comportant au moins une empreinte (108) délimitant deux positions extrêmes du bras (60,62) associé et une butée portée par l'autre plateau, de manière à limiter l'angle de rotation entre les deux plateaux (122,1244,102,104), la butée étant par exemple formée par un pion (126,114) amovible apte à être placé dans un orifice dans l'autre plateau en regard de l'empreinte.

7. Hotte selon la revendication 6, dans laquelle le plateau mobile associé au deuxième bras est formé par le volant.

8. Hotte selon la revendication 6 ou 7, dans laquelle le plateau mobile (124) est distinct du volant (68) de commande du premier bras (60) et solidaire en rotation de celui-ci.

9. Hotte selon la revendication précédente, dans laquelle le plateau fixe (122) pour le premier bras (60) est fixé sur la surface supérieure de la hotte.

10. Hotte selon l'une quelconque des revendications 6 à 9, dans laquelle les moyens d'assistance (98,100) comportent une empreinte (108) de manière à définir deux positions extrêmes adaptées à chaque chambre du container, par exemple les empreintes (108) sont des arcs de cercle centrés sur le centre des plateaux.

11. Hotte selon l'une quelconque des revendications précédentes, dans laquelle les moyens de commande comportent des moyens d'indexation en position de chaque bras, lesdits moyens d'indexation en position (128) comportant par exemple un pion (130) apte à coopérer avec des encoches (132.1 à 132.8, 132.P, R') pratiquées sur la périphérie du plateau mobile (124), chaque encoche étant alignée avec une extrémité d'une empreinte selon un rayon du plateau mobile en forme de disque.

12. Hotte selon l'une quelconque des revendications précédentes, dans laquelle le logement (76) est placé à une extrémité libre du deuxième bras (62) et comporte un fond étanche de manière à récolter les poussières et/ou débris portés par le moyen d'obturation (58)

13. Hotte selon l'une quelconque des revendications précédentes, dans laquelle le bras (62) comporte également le logement (94) pour le bouchon de l'orifice de branchement pneumatique du container.

14. Hotte selon l'une quelconque des revendications précédentes, dans laquelle la hotte comporte plusieurs ouvertures (10) pour être chacune mises en regard d'une chambre (A1, A2, A3, A4, A5 A6, A7, A8) respective du container, pour le chargement et le déchargement d'assemblages de combustible nucléaire.

15. Hotte selon l'une quelconque des revendications précédentes, comportant à son extrémité inférieure destinée à venir en contact de l'extrémité supérieure du container, une première (22) et une deuxième (24) faces d'appui annulaires, destinées à venir respectivement en appui d'une première et d'une deuxième faces supports du container, la deuxième face (24) d'appui étant disposée radialement vers l'intérieur dé la hotte relativement à la première face d"appui (22), les deux faces d'appui (22,24) étant raccordées par un cylindre (26) s'étendant selon l'axe longitudinal (X), la deuxième face d'appui (24) comportant avantageusement un moyen d'étanchéité (46) apte à venir en contact avec une face supérieure du container.

16. Hotte selon l'une quelconque des revendications précédentes, comportant un bouchon (12) pour l'ouverture (10).

17. Hotte selon l'une quelconque des revendications précédentes en combinaison avec la revendication 2, dans lequel le moyen de passage de l'outil pneumatique, comporte une ouverture obturée. (14) par un bouchon (16).

18. Dispositif de chargement d'au moins assemblage de combustible nucléaire dans un container de transport, comportant une hotte selon l'une quelconque des revendications précédentes et des moyens de confinement dynamique (200) destinés à être raccordé avec un canal en communication avec l'intérieur des chambres (A1, A2., A3, A4, A5, A6, A7, A8) et aptes à provoquer un écoulement d'air de l'extérieur vers l'intérieur de: la hotte, puis vers l'intérieur des chambres (A1, A2, A3, A4, A5, A6, A7, A8) pendant toute la période d'ouverture d'une chambre.

19. Dispositif selon la revendication précédente, dans lequel les moyens de confinement dynamique (200) comportent un moyen d'aspiration pneumatique (202) destiné à être raccordé à un moyen de collecte (206) de particules aspirées dans le container.

20. Procédé de chargement d'un container avec un assemblage de combustible nucléaire, comportant les étapes suivantes :
a) mise en place de la hotte selon l'une quelconque des revendications 1 à 17, sur l'extrémité supérieure d'un container,
b) branchement des moyens de confinement dynamique dans un partie inférieure du container pour créer un flux d'air vers l' intérieur du container,
c) retrait du bouchon pour l'outil pneumatique et de mise en place de l'outil pneumatique,
d) retrait du bouchon de la première alvéole,
e) mise en place d'un assemblage dans la première alvéole,
f) remise en place du bouchon de la première alvéole,
g) répétition des étapes d) à f) le cas échéant, pour le chargement d'autres assemblages dans les autres alvéoles,
h) retrait de l'outil pneumatique et de remise en place du bouchon pour l'outil pneumatique,
i) débranchement des moyens de confinement dynamique,
j) enlèvement de la hotte.

21. Procédé selon la revendication 20, dans lequel préalablement au retrait du bouchon de la première alvéole, les moyens de confinement dynamique (200) sont activés.

22. Procédé selon l'une des revendications 20 ou 21, dans lequel préalablement au retrait du bouchon pneumatique du container ou des bouchons des alvéoles, une étape de retrait d'un bouchon d'un passage associé de la hotte est effectuée.

## Claims

1. A cask for loading at least one nuclear fuel assembly in a transport container, comprising a body with a longitudinal axis (X) capable of sealably covering an upper end of a container, at least one aperture (10) for letting through a fuel assembly, and at least one means (56) capable of maintaining a means (58) for closing a chamber of the container inside the cask and at a distance from one entrance of said chamber during loading, wherein the maintaining means (56) comprises a first arm (60) rotationally mobile around a first axis and a second arm (62) attached to the first arm (60) and rotationally mobile relatively to the first arm, said cask also comprising external means for controlling the arms (68,86), and wherein the second arm (62) comprises a housing (76) for receiving the closing means.

2. The cask according to claim 1, comprising a means (14) for letting through a pneumatic tool intended to be connected to the container, and a housing (94) for receiving a plug (16) when the pneumatic tool is connected, said plug (16) being intended to seal the orifice for connecting the pneumatic tool to the container.

3. The cask according to claim 1 or 2, comprising control means (68) for the first arm (60) and control means (86) for the second arm (62), the second arm (62) being displaceable independently of the first arm (60).

4. The cask according to claim 3, wherein the control means (68,86) are manually actuated and comprise assistance means (98,100) for displacing the arms (60,62) along predetermined trajectories.

5. The cask according to the preceding claim, wherein the control means are formed by first (68) and second (86) handwheels firmly attached to first (64) and second (80) connecting shafts, respectively, said first (64) and second (80) connecting shafts being mechanically connected to the first (60) and second (62) arms, respectively, and a mechanical connection between the second handwheel (86) and the second arm (62) being advantageously positioned inside the first arm (60).

6. The cask according to claim 4 or 5, wherein the assistance means (98,100) comprise a fixed flange (122,104) and a rotationally mobile flange (124,102) with a connecting arm, the flanges being superimposed, a flange (124,104) comprising at least one imprint (108) delimiting two extreme positions of the associated arm (60,62) and an abutment borne by the other flange, so as to limit the angle of rotation between both flanges (122,124,102,104), the abutment being formed, for example, by a removable peg (126,114) capable of being placed in an orifice in the other flange facing the imprint.

7. The cask according to claim 6, wherein the mobile flange associated with the second arm is formed by the handwheel.

8. The cask according to claim 6 or 7, wherein the mobile flange (124) is distinct from the handwheel (68) for controlling the first arm (60) and jointly rotatable with the latter.

9. The cask according to the preceding claim, wherein the fixed flange (122) for the first arm (60) is attached onto the upper surface of the cask.

10. The cask according to any of claims 6 to 9, wherein the assistance means (98,100) comprise an imprint (108) so as to define two extreme positions adapted to each chamber of the container, for example the imprints (108) being circular arcs centered on the centre of the flanges.

11. The cask according any of the preceding claims, wherein the control means comprise indexation means for the position of each arm, the position-indexing means (128) comprising for example a peg (130) capable of cooperating with notches (132.1 to 132.8, 132.P, R') made on the periphery of the mobile flange (124), each notch being aligned with an end of an imprint along a radius of a disk forming the mobile flange.

12. The cask according to any of the preceding claims, wherein the housing (76) is placed at a free end of the second arm (62) and in that it comprises a sealed bottom so as to collect dusts and/or debris borne by the sealing means (58).

13. The cask according to any of the preceding claims, wherein the arm (62) also comprises the housing (94) for the plug of the orifice for pneumatically connecting the container.

14. The cask according to any of the preceding claims, wherein the cask comprises several apertures (10) intended to be each placed opposite to a respective chamber (A1, A2, A3, A4, A5, A6, A7, A8) of the container, for loading and unloading nuclear fuel assemblies.

15. The cask according to any of the preceding claims, comprising at its lower end intended to come into contact with the upper end of the container, first (22) and second (24) annular bearing faces, intended to respectively bear against first and a second supporting faces of the container, the second bearing face (24) being positioned radially towards the inside of the cask relatively to the first bearing face (22), both bearing faces (22,24) being connected through a cylinder (26) extending along the longitudinal axis (X), the second bearing face (24) comprises in advantageous manner a sealing means (46) capable of coming into contact with an upper face of the container.

16. The cask according to any of the preceding claims, comprising a plug (12) for the aperture (10).

17. The cask according to any of the preceding claims in combination with claim 2, wherein the means for letting through the pneumatic tool, comprises an aperture (14) sealed by a plug (16).

18. A device for loading at least one nuclear fuel assembly in a transport container, comprising a cask according to any of the preceding claims and dynamic confinement means (200) intended to be connected with a channel communicating with the inside of the chambers (A1, A2, A3, A4, A5, A6, A7, A8) and capable of causing a flow of air from the outside to the inside of the cask, and then to the inside of the chambers (A1, A2, A3, A4, A5, A6, A7, A8) for the whole opening period of a chamber.

19. The device according to the preceding claim, wherein the dynamic confinement means (200) comprise a pneumatic suction means (202) intended to be connected to a means (206) for collecting particles sucked up into the container.

20. A method for loading a container with a nuclear fuel assembly, comprising the following steps:
a) placing the cask according to any of claims 1 to 17, on the upper end of a container,
b) connecting dynamic confinement means in a lower portion of the container in order to create an air flow towards the inside of the container,
c) removing the plug for the pneumatic tool and placing the pneumatic tool,
d) removing the plug from the first cell,
e) placing an assembly in the first cell,
f) replacing the plug of the first cell,
g) repeating steps d) to f) if necessary, for loading other assemblies in the other cells,
h) removing the pneumatic tool and replacing the plug for the pneumatic tool,
i) disconnecting the dynamic confinement means,
j) removing the cask.

21. The method according to claim 20, wherein the dynamic confinement means (200) are actuated prior to the removal of the plug of the first cell.

22. The method according to claim 21 or 22, wherein a step for removing a plug from an associated passage of the cask is carried out prior to the removal of the pneumatic plug of the container or of the plugs of the cells.

## Patentansprüche

1. Haube für das Einladen mindestens einer Nuklearbrennstoffbaugruppe in einen Transportbehälter, aufweisend einen Körper mit Längsachse (X), der geeignet ist, in dichter Weise ein oberes Ende eines Behälters abzudecken, mindestens eine Öffnung (10) für den Durchgang einer Brennstoffbaugruppe und mindestens eine Einrichtung (56), die geeignet ist, eine Verschlusseinrichtmig (58) einer Kammer eines Behälters im Inneren der Haube und in Entfernung zu einem Zugang dieser Kammer während des Beladens festzuhalten, **dadurch gekennzeichnet, dass** die Halteeinrichtung (56) einen ersten Arm (60), der in Drehrichtung beweglich um eine erste Achse ist, und einen zweiten Arm (62) aufweist, der am ersten Arm (60) befestigt ist und in Drehrichtung beweglich bezüglich des ersten Arms ist, wobei die Haube auch externe Einrichtungen zum Steuern der Arme (68, 86) aufweist, und der zweite Arm (62) eine Aufnahme (76) zum Aufnehmen der Verschlusseinrichtung aufweist.

2. Haube nach Anspruch 1, die eine Durchgangseinrichtung (14) für ein pneumatisches Werkzeug, das dazu bestimmt ist, auf dem Behälter angeschlossen zu werden, und eine Aufnahme (94) aufweiset, um einen Verschlussdeckel (16) aufzunehmen, wenn das pneumatische Werkzeug angeschlossen ist, wobei der Verschlussdeckel (16) dazu bestimmt ist, die Öffnung zum Anschließen des pneumatischen Werkzeugs auf dem Behälter zu verschließen.

3. Haube nach Anspruch 1 oder 2, die Steuereinrichtungen (68) für den ersten Arm (60) und Steuereinrichtungen (86) für den zweiten Arm (62) anfweist, wobei der zweite Arm (62) unabhängig vom ersten Arm (60) bewegt werden kann.

4. Haube nach Anspruch 3, bei welcher die Steuereinrichtungen (68, 86) manuell betätigt werden und Unterstützungseinrichtungen (98, 100) aufweisen, um die Arme (60, 62) gemäß vorbestimmten Bahnen zu bewegen.

5. Haube nach dem vorhergehenden Anspruch, bei welcher die Steuereimichtungen durch ein erstes (68) und ein zweites (86) von Handrädern gebildet sind, die mit einer ersten (64) bzw. einer zweiten (80) Verbindungswelle fest verbunden sind, wobei die erste (64) und zweite (80) Verbindungswelle mechanisch mit dem ersten (60) bzw. dem zweiten Arm (62) mechanisch verbunden sind, wobei eine mechanische Verbindung zwischen dem zweiten Handrad (86) und dem zweiten Arm (62) verteilhaft im Inneren des ersten Arms (60) angeordnet ist.

6. Haube nach Anspruch 4 oder 5, bei der die Unterstützungseinrichtungen (98, 100) eine feststehende Platte (122, 104) und eine bewegliche Platte (124, 102) aufweisen, die gemeinsam mit einer Verbindungswege rotiert, wobei die Platten übereinander angeordnet sind, und eine Platte (124, 104) mindestens eine Vertiefung (108) aufweist, die zwei Extrempositionen des zugehörigen Arms (60, 62) begrenzt, und ein Anschlag von der anderen Platte getragen wird, derart, dass der Dachwinkel zwischen den zwei Platten (122, 1244, 102, 104) begrenzt wird, wobei der Anschlag beispielsweise durch einen herausnehmbaren Stift (126, 114) gebildet wird, der geeignet ist, in eine Öffnung in der anderen Platte eingesetzt zu werden, die sich gegenüberliegend der Vertiefung befindet.

7. Haube nach Anspruch 6, bei der die bewegliche Platte, die zum zweiten Arm gehört, durch das Handrad gebildet ist.

8. Haube nach Anspruch 6 oder 7, bei der die bewegliche Platte (124) vom Steuerhandrad (68) des ersten Arms (60) verschieden ist und mit diesem drehfest verbunden ist.

9. Haube nach dem vorhergehenden Anspruch, bei der die feststehende Platte (122) für den ersten Arm (60) auf der Oberseite der Haube befestigt ist.

10. Haube nach einem der Ansprüche 6 bis 9, bei der die Unterstützungseinrichtungen (98, 100) eine Vertiefung (108) aufweisen, derart, dass zwei Extrempositionen definiert werden, die an jede Kammer des Behälters angepasst sind, beispielsweise sind die Vertiefungen (108) Kreisbögen, die um die Mitte der Platten zentriert sind.

11. Haube nach einem der vorhergehenden Ansprüche, bei der die Steuereinrichtungen Einrichtungen zur Positionsindexierung eines jeden Arms aufweisen, wobei die Einrichtungen zur Positionsindexierung (128) beispielsweise einen Stift (130) aufweisen, der geeignet ist, mit Auskerbungen (132.1 bis 132.8, 132.P, R') zusammenzuarbeiten, die am Umfang der beweglichen Platte (124) ausgebildet sind, wobei jede Auskerbung entlang einem Radius der scheibenförmigen beweglichen Platte fluchtend zu einem Endpunkt einer Vertiefung angeordnet ist.

12. Haube nach einem der vorhergehenden Ansprüche, bei der die Aufnahme (76) an einem freien Ende des zweiten Arms (62) angeordnet ist und einen abgedichteten Boden aufweist, derart, dass Staub und/oder Rückstände gesammelt werden, die von der Verschlusseinrichtung (58) mitgeführt werden.

13. Haube nach einem der vorhergehenden Ansprüche, bei welcher der Arm (62) auch die Aufnahme (94) für den Verschlussdeckel der pneumatischen Anschlussöffnung des Behälters aufweist.

14. Haube nach einem der vorhergehenden Ansprüche, wobei die Haube mehrere Öffnungen (10) aufweist, die jeweils gegenüberliegend einer Kammer (A1, A2, A3, A4, A5, A6, A7, A8) des Behälters anzuordnen sind, um die Nuklearbrennstoffbaugruppen einzuladen und zu entladen.

15. Haube nach einem der vorhergehenden Ansprüche, die an ihrem unteren Ende, das dazu bestimmt ist, mit dem oberen Ende des Behälters in Kontakt zu kommen, eine erste (22) und eine zweite (24) von ringförmigen Auflageflächen aufweist, die dazu bestimmt sind, mit einer ersten bzw. einer zweiten Trägerfläche des Behälters zur Anlage zu kommen, wobei die zweite Auflagefläche (24) radial zum Inneren der Haube hin bezüglich der ersten Auflagefläche (22) angeordnet ist, wobei die beiden Auflageflächen (22, 24) durch einen Zylinder (26) verbunden sind, der sich entlang der Längsachse X erstreckt, wobei die zweite Auflagefläche (24) vorteilhaft eine pastenförmige Abdichtungseinrichtung (46) aufweist, die mit einer oberen Fläche des Behälters in Kontakt kommen soll.

16. Haube nach einem der vorhergehenden Ansprüche, die einen Verschlussdeckel (12) für die Öffnung (10) aufweist.

17. Haube nach einem der vorhergehenden Ansprüche in Verbindung mit Anspruch 2, bei der die Durchgangseinrichtung des pneumatischen Werkzeugs eine Öffnung (14) aufweiset, die durch einen Verschlussdeckel (16) verschossen ist.

18. Vorrichtung zum Einladen mindestens einer Nuklearbrennstoflbaugruppe in einen Transportbehälter, die eine Haube nach einem der vorhergehenden Ansprüche und dynamische Einschlusseinrichtungen (200) aufweist, die dazu bestimmt sind, mit einem Kanal verbunden zu werden, der sich in Verbindung mit dem Inneren der Kammern (A1, A2, A3, A4, A5, A6, A7, A8) befindet, und die geeignet sind, ein Strömen von Luft vom Äußeren zum Inneren der Haube hin, und dann zum Inneren der Kammern (A1, A2, A3, A4, A5, A6, A7, A8) während des gesamten Zeitraums einer Öffnung einer Kammer hervorzurufen.

19. Vorrichtung nach dem vorhergehenden Anspruch, bei der die dynamischen Einschlusseinrichtungen (200) eine pneumatische Ansaugeinrichtung (202) aufweisen, die dazu bestimmt ist, mit einer Einrichtung zum Sammeln (206) von im Behälter angesaugten Partikeln verbunden zu werden.

20. Verfahren zum Beladen eines Behälters mit einer Nuklearbrennstoffbaugruppe, welches die folgenden Schritte aufweist:
a) Aufsetzen der Haube nach einem der Ansprüche 1 bis 17 auf das obere Ende eines Behälters,
b) Anschließen von dynamischen Einschlusseinrichtungen in einen unterem Teil des Behälters, um einen Luftstrom zum Inneren des Behälters hin zu erzeugen,
c) Abnehmen des Verschlussdeckels für das pneumatische Werkzeug und Einsetzen des pneumatischen Werkzeugs,
d) Abnehmen des Verschlussdeckels der ersten Zelle,
e) Einsetzen einer Baugruppe in die erste Zelle,
f) Wiederaufsetzen des Verschlussdeckels der ersten Zelle,
g) ggf. Wiederholen der Schritt d) bis f), für das Einladen von weiteren Baugruppen in die weiteren Zellen,
h) Abnehmen des pneumatischen Werkzeugs und Wiedereinsetzen des Verschlussdeckels für das pneumatische Werkzeug,
i) Abklemmen der dynamischen Einschlusseinrichtungen,
j) Abheben der Haube.

21. Verfahren nach Anspruch 20, bei dem, vorab zum Abnehmen des Verschlussdeckels der ersten Zelle, die dynamischen Einschlusseirichtungen (200) aktiviert werden.

22. Verfahren nach einem der Ansprüche 20 oder 21, bei dem, vorab zum Abnehmen des pneumatischen Verschlussdeckels des Behälters oder der Verschlussdeckel der Zellen, ein Schritt eines Abnehmens eines Verschlussdeckels eines zugehörigen Durchgangs der Haube durchgeführt wird.
